# EUROPEAN PATENT SPECIFICATION

(11) **EP 3 699 359 B1**
(45) Date of publication and mention of the grant of the patent: **06.07.2022**
(21) Application number: 18814664.1
(22) Date of filing: 05.10.2018
(51) Int. Cl.: E01C 19/48, E01C 19/46

(54) **ASPHALT AGGREGATE PAVER FOR ASPHALTING A SURFACE TO BE ASPHALTED**
ASPHALTFERTIGER ZUM ASPHALTIEREN EINER ZU ASPHALTIERENDEN FLÄCHE
FINISSEUR D'ASPHALTE POUR GOUDRONNER UNE SURFACE À GOUDRONNER

(30) Priority: 16.10.2017 ES 201731224 U
(43) Date of publication of application: 26.08.2020
(73) Proprietor: Agustí Y Masoliver, S.A., 7820 Banyoles (ES)
(72) Inventor: ECHAVE CONGOST, Marc, 17820 Banyoles (ES)
(74) Representative: Curell Suñol S.L.P.
(86) International application number: PCT/ES2018/070651
(87) International publication number: WO 2019/077177

(56) References cited:
- FR-A- 1 443 136
- GB-A- 1 355 620
- US-A- 6 071 040
- US-A1- 2004 223 808

## Description

### Field of the invention

The invention relates to an asphalt aggregate paver for asphalting a surface to be asphalted, according to the preamble of claim 1.

### State of the art

In the process of asphalting a public thoroughfare, it is necessary to spread the asphalt aggregate uniformly width-wise across the thoroughfare in order to then compact it.

In the invention, when the term "aggregate" is used, it refers to an asphalt aggregate.

The machinery intended for spreading asphalt aggregate over the public thoroughfare to be asphalted is known in the art as a paver. The purpose of a paver is to spread or scatter a uniform layer of agglomerate as it moves forward across the entire width of the machine which must subsequently be compacted by a suitable road roller working behind the paver.

The asphalt agglomerate comes from asphalt production sites located far away from the public thoroughfare that is being asphalted. Dump trucks that are open in the upper part and simply covered with a tarp are used to transport the agglomerate. The purpose of the tarp is to reduce temperature losses of the aggregate as much as possible between the production site and the public thoroughfare to be asphalted. The tarp also has the purpose of preventing the aggregate to be eventually harmed.

Nevertheless, temperature losses are unavoidable and always occur to a greater or lesser extent.

A conventional dump truck for asphalt may transport several tons of aggregate in each trip. Dump trucks often transport in the order of 25 tons of product.

Due to the considerable mass that is transported, cooling takes place in the outermost layer of the aggregate mass. On the contrary, the inner part of the mass virtually remains at a constant temperature and loses little temperature until it is used for the asphalting process.

The asphalt aggregate production temperature is between 160 and 180°C. In turn, the optimal on-site application temperature is in the order of 140°C. Despite the fact that the inner part of the aggregate mass contained in the dump truck may maintain a suitable temperature above the suitable temperature, it is not uncommon for the surface layer to cool down to 100°C.

Temperatures in the asphalt aggregate mass that are too low before said mass is spread over the public thoroughfare to be asphalted lead to a deficient asphalting quality. Above all, if the spreading temperature is heterogeneous and low, the compacting process by means of the road roller is also more deficient. This leads to minimal irregularities on the asphalted surface that facilitate early deterioration of the public thoroughfare.

Therefore, the more homogeneous and higher the temperature of the aggregate during its application, the better the asphalting quality.

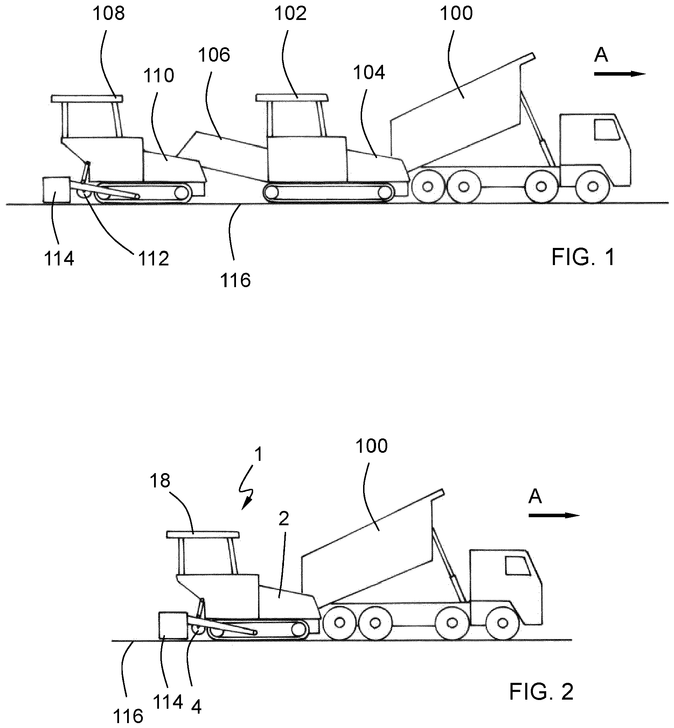

An asphalting method shown in Figure 1 for asphalting large surfaces, and more particularly for asphalt wearing courses, is known in the state of the art.

The direction of spreading the aggregate corresponds to the forward movement direction of the machines of Figure 1, depicted by arrow A.

A dump truck 100 with the asphalt aggregate mass is located in the front. The dump truck 100 deposits the aggregate mass, not shown in detail, in a first hopper 104 of an asphalt transfer machine, referred to in the art as a transfer machine 102. The aggregate mass for filling the first hopper may amount to 7 tons. In this particular method, worm screws mixing the aggregate mass in order to homogenize its temperature are arranged inside this first hopper 104. This method involves certain cooling of the aggregate mass.

After the homogenization process, the aggregate mass is conveyed by means of a first conveyor belt 106 to the rear part of the transfer machine 102.

The first conveyor belt 106 drops the asphalt mass inside a second hopper 110 of a paver 108, the aggregate mass having a homogeneous temperature. Inside this second hopper 108 there is mounted a second conveyor belt, not shown, which drops the aggregate onto a first worm screw 112 that distributes it width-wise across the surface 116 to be asphalted.

Behind the first worm screw 112 there is provided a level 114 that is in charge of distributing the aggregate more uniformly width-wise across the surface, in the forward movement direction.

Simultaneously, a road roller, which is not shown in the drawings and which circulates behind the paver, is in charge of the final compaction of the asphalted surface.

The asphalting train, i.e., the assembly that moves together formed by the dump truck 100, transfer machine 102, and paver 108, moves forward together until the dump truck 100 has dumped its entire contents into the transfer machine 102.

When the dump truck 100 is empty, it is moved away from the transfer machine 102 and a new dump truck 100 is provided for feeding the transfer machine 102 with more aggregate.

This solution is complex and requires an enormous investment in machinery. This has a direct effect on the asphalting cost and makes the public work unnecessarily more expensive.

Documents US2004223808A1 and FR1443136A further disclose pavers according to the preamble of claim 1.

### Summary of the invention

It is an object of the invention to provide an asphalt aggregate paver of the type indicated above, which allows asphalting surfaces and achieving a better surface finish but in a simple and cost-effective manner.

Furthermore, the invention has to increase the flexibility and maneuverability during the known asphalting methods. In that sense, the paver must allow working in public thoroughfares having very different characteristics, such as large highways or winding streets.

This purpose is achieved by means of a paver of the type indicated above, according to the characterizing portion of claim 1.

In particular, the mixing means are located behind the receiving hopper in the forward movement direction of the asphalting train.

This solution has a number of advantages with respect to the solutions known in the state of the art.

Firstly, the asphalting method is considerably simplified. Thanks to the mixing means being provided in the paver, the temperature of the asphalt aggregate can be homogenized like in the known method. Nevertheless, it is no longer necessary to place a transfer machine between the dump truck and the paver.

The mixing means can mix the aggregate mass in different ways. It is simply necessary for the mixing means to move with respect to the conveyor means, either by a linear movement in the direction opposite the forward movement direction of the aggregate mass, such as for example by means of a system of combs, by rotation, by means of an undulating movement, or the like. The existence of relative movement between both parts is enough for the outermost layer of the aggregate mass to be mixed with the inner layer and for the total temperature of the mass to become homogeneous. The more movement there is between layers, the better the homogenization.

Furthermore, by dispensing with a transfer machine, the cost of asphalting drops dramatically. In fact, due to its high cost, the known method with transfer machines can be applied to only some wearing courses. In contrast, as a result of the simplification represented by the paver according to the invention, the novel method can be applied to any type of public thoroughfares and on all the asphalt layers desired. Nonetheless, the cost is not considerably higher than that of the method not including homogenization.

On the other hand, the surface finish is the same or better than in the case of the method using the transfer machine. By eliminating the transfer machine, the time and distance between the point in which asphalt aggregate is stirred and its temperature is homogenized and the point in which it is finally deposited on the surface to be asphalted is also reduced. Therefore, in addition to homogenizing the asphalt aggregate, temperature losses therein are reduced. This is favourable for subsequent tamping, because if the aggregate mass arrives on site at borderline temperatures, it is important to prevent considerable temperature losses in addition to those taking place during transport.

Another synergistic effect obtained as a result of the paver according to the invention consists of the method being much more flexible. The length of the asphalting train is smaller. Now only the dump truck and paver are required in the asphalting train. The transfer machine is no longer required. Therefore, it is easier to maneuver the assembly and much narrower surfaces can be asphalted, such as windy streets, small roads having smaller radius of curvature.

Finally, the fact that the mixing means are outside of the receiving hopper assures that the dump truck cannot collide with them and jeopardize the operation of the paver. The invention further includes a number of preferred features that are object of the dependent claims and the utility of which will be highlighted hereinafter in the detailed description of an embodiment of the invention.

In one embodiment, said mixing means are arranged inside a casing, after said receiving hopper, separating said mixing means from said receiving hopper. Not only does this eliminate the risk of any collision with the dump truck, but it furthermore hinders any possible recirculation of aggregate to the receiving hopper. On the other hand, usage safety of the paver also increases.

According to the invention, said mixing means are arranged above said conveyor means, such that the aggregate mass is maximally utilized, since the lower support surface are the conveyor means themselves.

In another embodiment, the distal end of said mixing means adjacent to said conveyor means is arranged at a distance comprised between 10 and 70 mm above said conveyor means and more preferably between 20 and 50 mm. This provides optimal mixing for homogenizing the temperature. The mixing means getting jammed against the conveyor means are simultaneous prevented.

Preferably, said mixing means are rotatably mounted about an axis. As a result, the asphalt aggregate mass is stirred with greater intensity than by means of linear movements in a direction different from the direction of conveyance of the mass. As a result, a more homogeneous homogenization is achieved.

In another particularly preferred embodiment, said mixing means comprise at least one rotor with a plurality of blades, said at least one rotor being rotatably mounted about an axis transverse to the longitudinal direction of said paver. The effect of the blades maximizes homogenization of the aggregate mass.

In another particularly preferred embodiment, a first imaginary plane for the conveyance of said aggregate passes over the upper surface of said conveyor means, and in that said at least one rotor is rotatably mounted about an axis oriented in a first direction perpendicular to said imaginary plane. This configuration reduces the efforts required for stirring the aggregate mass. Furthermore, the forward movement of the aggregate flow is also optimized, because despite being stirred, the forward movement of the mass takes place on a horizontal plane, and the aggregate mass therefore moves forward more smoothly. When the machine is supported on a horizontal surface, the imaginary plane for conveyance would be horizontal, such that the axis of the rotor would be vertical. Nevertheless, this does not always have to be the case, and the paver can work on an inclined plane.

In an alternative embodiment, a first imaginary plane for the conveyance of said aggregate passes over the upper surface of said conveyor means, and in that said at least one rotor is rotatably mounted about an axis oriented in a second direction parallel to said imaginary plane and perpendicular to said longitudinal direction of said paver. This configuration is particularly preferred when an increase in the aggregate mass stirring intensity is sought.

In another preferred embodiment, said mixing means comprise at least two rotors with a plurality of blades, and in that said at least two rotors rotate in opposite directions with respect to one another, which again considerably increases the homogenization of the aggregate mass, stirring the mass such that the hottest, innermost layers move towards the outer part of the mass. Preferably, said two rotors are arranged width-wise on said paver.

In another alternative embodiment, said mixing means comprise at least two rotors, a first rotor of said at least two rotors being offset with respect to the second rotor of said at least two rotors in the longitudinal direction.

In an improved embodiment the purpose of which is to maximize the homogenization of the asphalt aggregate when the rotor rotates about a vertical axis, said plurality of blades projects from said transversely, and preferably in the radial direction. It has been found that this embodiment intensifies the mixing movement in the aggregate mass, since it allows stirring across the entire width of aggregate mass being moved by the conveyor means.

On the other hand, to simplify construction of the rotors, the blades preferably project perpendicular to the first vertical direction.

It is also particularly preferred for said plurality of blades to be distributed along the height of said rotor. It is particularly desirable to form groups of blades grouped together projecting from the rotor by layers. In this case, the crossing points of the axes of the blades with the axis of the rotor of one and the same group of blades are preferably co-planar. In another particularly simple embodiment as regards its construction, the axes of the blades themselves of a group of blades are co-planar. In other words, each of the planes containing the axes of the blades of each group of blades is spaced a predetermined distance in height from the plane containing the axes of blades of the groups of adjacent blades, such that the aggregate mass is stirred by layers.

Also in a particularly preferred manner, the blades of a group of blades are uniformly distributed along the perimeter of the rotor. To make it easier to replace rotors, the blades of a group of blades are particularly preferred to be arranged at identical angular distances. For example, if there are four blades, the angular distance between blades is 90°.

In another embodiment, each blade of said plurality of blades is planar, and each blade forms an angle with respect to a horizontal plane, i.e., when the axes of the rotors are vertical, it would be with respect to the plane perpendicular to the first vertical direction.

The blades may also have a certain curvature along a generating trajectory along which they extend. Nevertheless, in a particularly preferred manner the blades are planar so as to simplify their manufacture.

Also in a particularly preferred manner, the blades are mounted such that the vertex of said angle is located in the front part, in the direction of rotation of said rotor, whereas in the adjacent rotor in the direction of forward movement of the aggregate, the vertex of said angle is located in the rear part in the direction of rotation of said rotor. As a result of this arrangement, an upward movement of the asphalt aggregate is generated, which intensifies the homogenization in order to then cause a downward movement in the adjacent rotor. This causes an additional mixing effect between layers, in the direction transverse to the direction of forward movement of the aggregate mass.

Finally, in a particularly preferred manner in order to intensify the homogenizing effect, said paver comprises connection means between rotors suitable for making adjacent rotors in the longitudinal direction of the paver rotate in opposite directions. An example of connection means may be, for example, chains or toothed belts, which allows moving the wheels of the rotors farther apart from one another and increasing the stirring area.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic side view of a known method for spreading asphalt aggregate.
Figure 2 shows a schematic side view of the method for spreading asphalt aggregate according to the invention.
Figure 3 shows a schematic side view of an asphalt aggregate paver according to the invention.
Figure 4 shows a schematic sectioned top plan view of the paver of Figure 3.
Figure 5 shows a schematic front detail view of the mixing means of the paver of Figure 3.
Figure 6 shows a schematic front view of the paver of Figure 3 with the receiving hopper in the maximum loading volume position.
Figure 7 shows a schematic front view of the paver of Figure 3 with the receiving hopper in minimum loading volume position.
Figure 8 shows a schematic side view of a second asphalt aggregate paver according to the invention.
Figure 9 shows a schematic front detail view of the mixing means of the paver of Figure 8.
Figure 10 shows a schematic side view of a known asphalt aggregate paver.
Figure 11 shows a schematic front detail view of the mixing means of the paver of Figure 10.
Figure 12 shows a schematic side view of a fourth asphalt aggregate paver according to the invention.
Figure 13 shows a schematic sectioned top plan view of the paver of Figure 12.
Figure 14 shows a schematic front view of a fifth asphalt aggregate paver with the receiving hopper in the maximum loading volume position.
Figure 15 shows a schematic side view of the paver of Figure 14.
Figure 16 shows a front perspective detail view of the mixing means of the paver of Figure 14.
Figure 17 shows a bottom perspective view of the mixing means of the paver of Figure 14.
Figure 18 shows a schematic top plan view of the inner mechanism of the mixing means of the paver of Figure 14.

### Detailed description of embodiments of the invention

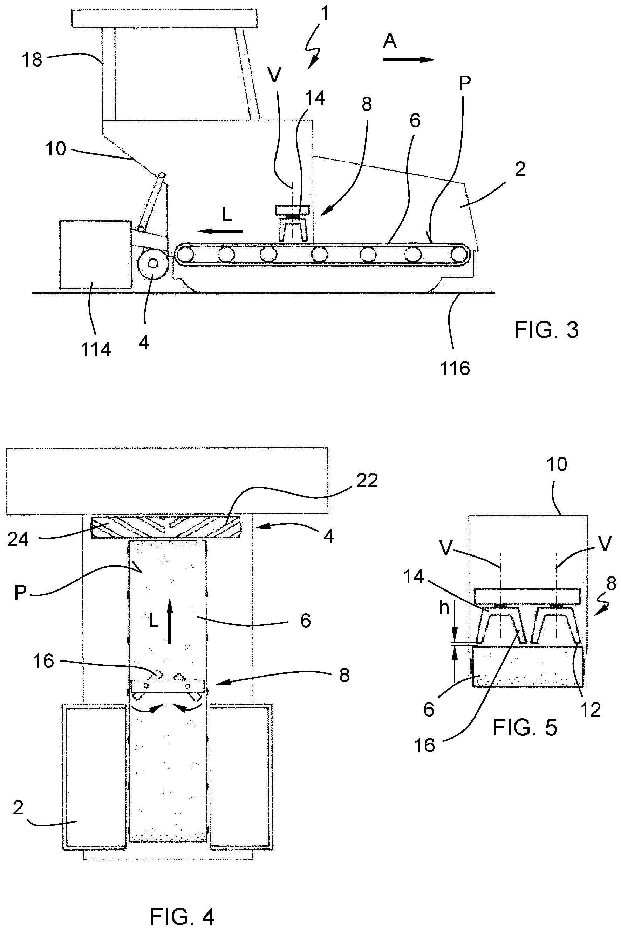

Figures 3 to 7 show a first embodiment of the asphalt aggregate paver 1 according to the invention for asphalting a surface 116 to be asphalted.

The paver 1 has a control cabin 18 under which the spreading elements are arranged.

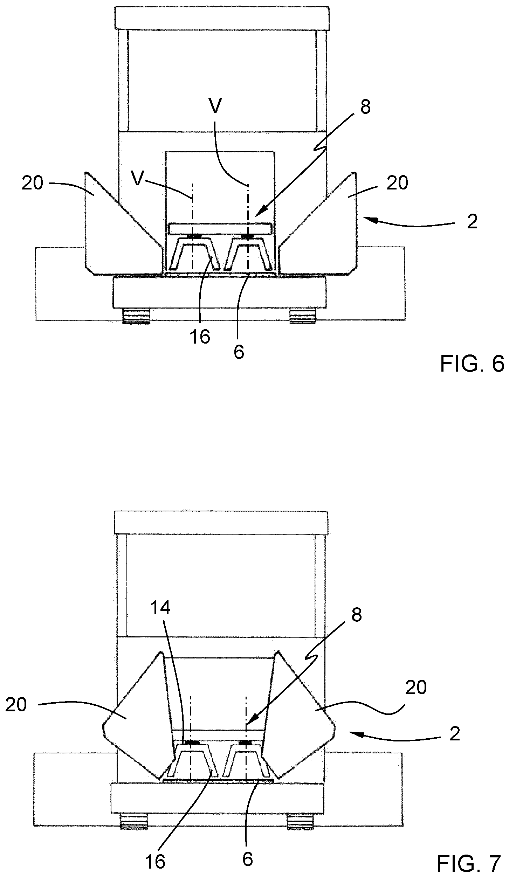

From right to left in Figure 3, the paver 1 has a receiving hopper 2 for receiving asphalt aggregate. As can be seen in Figures 6 and 7, the receiving hopper 2 comprises two semi-casings 20, each of which is mounted in a rocking manner with respect to the body of the paver 1, about a longitudinal axis. This allows the aggregate not to get caught in the receiving hopper 2 and to be maximally utilized.

Behind the control cabin 18, the paver 1 has width-wise spreading means 4 for distributing the aggregate over the surface 116 to be asphalted. The spreading means 4 of this embodiment consist of a worm screw. The worm screw has a first half 22, with the blades oriented in one direction, and the second half 24, with the blades oriented in the direction opposite that of the first half 22. The worm screw is arranged in a direction transverse to the longitudinal direction L of the paver 1. The spreading means 4 can thereby distribute the aggregate over the surface 116 to be asphalted on both sides of the central axis of the paver 1.

To feed the spreading means 4, between the receiving hopper 2 and the spreading means 4 there are provided conveyor means 6 for feeding the spreading means 4. The conveyor means 6 convey the aggregate from the receiving hopper 2 to the spreading means 4, in the longitudinal direction L, parallel to the direction of forward movement A. The conveyor means are, for example, an articulated metal plate conveyor belt, capable of withstanding temperatures greater than 100°C without becoming worn.

To solve the objectives of the invention, the paver 1 furthermore has mixing means 8. These mixing means 8 are a separate element of the conveyor means 6.

The mixing means 8 are arranged between the receiving hopper 2 and the spreading means 4. These mixing means 8 are movable with respect to the conveyor means 6. This movement has a direction that is different from the direction for the conveyance of the aggregate mass indicated by the longitudinal direction L.

The conveyor means 6 are, in that sense, exclusively in charge of longitudinally moving the aggregate mass. In contrast, the mixing means 8 stir the aggregate mass, such that the outer cold layers move towards the center of the mass and the inner hot layers move towards the surface. What matters is that the mixing means 8 and the conveyor means 6 have, at least at some time, different movement speeds and/or different movement directions, which causes the aggregate mass to be stirred.

It can be seen in the figures that the mixing means 8 are arranged outside and after the receiving hopper 2. To that end, the mixing means 8 are arranged inside a casing 10, after the receiving hopper 2. The casing 10 separates the mixing means 8 from the receiving hopper 2. This prevents the dump truck 100 from being able to damage the mixing means 8 when unloading the asphalt mass aggregate.

The mixing means 8 can perform different movements that allow homogenizing the aggregate mass. For example, linear movements in the direction opposite the direction for the conveyance of the aggregate mass can be conceived. The mixing means can also move by undulating movement along the longitudinal direction of conveyance. Nevertheless, in this embodiment the mixing means 8 are arranged above said conveyor means 6 and are rotatably mounted about an axis.

More particularly, the mixing means 8 of this embodiment are formed by two rotors 14. Each rotor 14 has two blades 16 kneading the aggregate mass during conveyance. Each rotor 14 rotates about an axis transverse to the longitudinal direction L of the paver 1. The rotors 14 rotate in opposite directions with respect to one another, as can be seen with the arrows of Figure 4.

It can be seen in Figures 3 to 7 that in this case the axis of rotation is a vertical axis.

Specifically, a first imaginary plane P for the conveyance of the aggregate which corresponds with the upper surface of the conveyor belt of Figure 3 passes over the upper surface of the conveyor means 6. So in this case, each of the rotors 14 rotates about an axis oriented in a first vertical direction V, being perpendicular to the imaginary plane P. The vertical direction obviously refers to the direction of the drawing, since the actual direction depends on the angle of inclination of the surface to be asphalted.

It can be seen in Figure 5 that the distal end 12 of the blades that constitute the mixing means 8 adjacent to the conveyor means 6 are arranged at a distance h comprised between 10 and 70 mm above the conveyor belt. In a particularly preferred manner, in order to reduce energy consumption of the mixing means without abandoning good homogenization, the distance h is comprised between 20 and 50 mm.

As a result of the paver 1, an asphalting method which is described below can be put into practice.

The asphalting method comprises a first step of receiving an asphalt aggregate mass in a receiving hopper 2.

Then the method comprises a step of conveying said aggregate mass in a longitudinal direction L, from said receiving hopper 2 to spreading means 4 configured for carrying out a step of spreading said aggregate width-wise over the surface 116 to be asphalted.

The method comprises a step of mixing said asphalt aggregate using mixing means 8, said mixing step taking place between said receiving step and said spreading step for spreading the mass over the surface to be asphalted, said mixing step being independent of, but simultaneous to, a said conveying step. Finally, the method comprises a spreading step for spreading said aggregate mass width-wise across said surface to be asphalted.

Said receiving, conveying, mixing, and spreading steps take place in one and the same paver.

Other embodiments of the paver according to the invention which share many of the features described in the preceding paragraphs are shown below. Accordingly, only the different elements will be described hereinafter, whereas reference is made to the description of the first embodiment for the common elements.

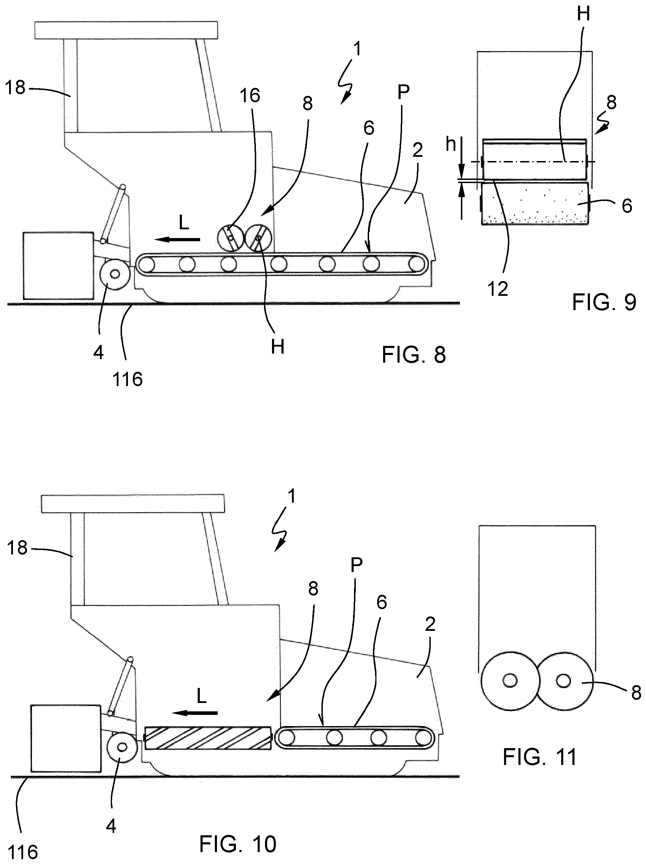

Figures 8 and 9 show a second paver 1 according to the invention. In this case, the mixing means 8 consist of two cylindrical rotors 14 with blades 16 extending along each of the cylinders.

In this case, the rotors 14 are oriented in a direction that is horizontal and transverse to the longitudinal direction L. More particularly, like in the preceding embodiment, a first imaginary plane P for the conveyance of the aggregate passes over the upper surface of the conveyor means 6. Each of the rotors 14 is rotatably mounted about an axis oriented in a second horizontal direction H, which is parallel to the imaginary plane P. Therefore, this axis is perpendicular to the longitudinal direction L of the paver 1. This arrangement provides a more intense mixing. Nevertheless, it requires a higher mixing power than the preceding embodiment does.

In this embodiment, furthermore, the two rotors 14 are offset with respect to one another. The first rotor 14, off to the side of the receiving hopper 2, is spaced from the second rotor 14 in the longitudinal direction L. This also increases homogenization of the aggregate mass in a notable manner.

In the prior art paver of Figures 10 and 11, the mixing means 8 are two worm screws arranged adjacent to one another, and they are rotatably mounted about axes oriented in the longitudinal direction L. In this case, these two worm screws are arranged after the conveyor belt.

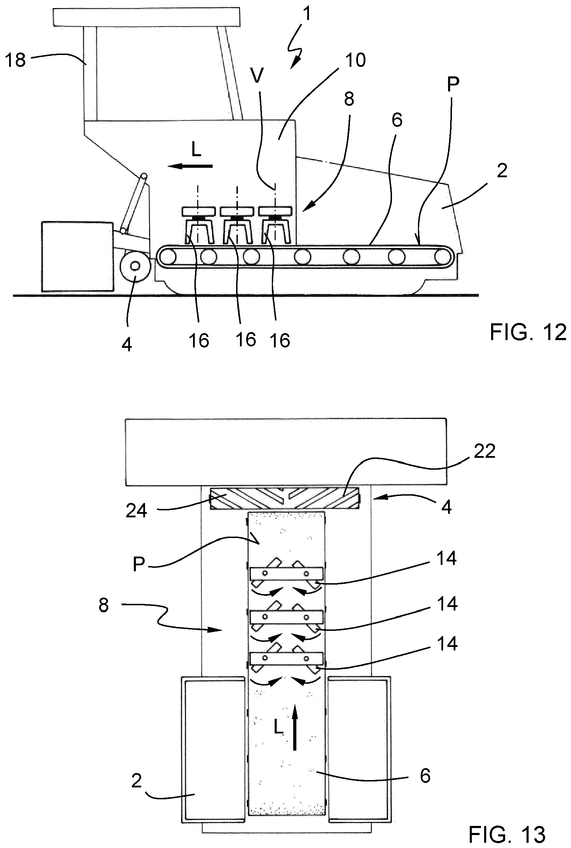

The embodiment of Figures 12 and 13 is based on the embodiment of Figures 3 to 7. In this case, the main difference consists of the mixing means 8 being formed by six rotors with a plurality of blades 16 arranged in twos. In this case, three rows of rotors 14 are formed. Each pair of rotors 14 of each row rotate in opposite directions with respect to one another, but furthermore, in the longitudinal direction L, the rotors 14 also rotate in directions opposite to the adjacent rotors 14, as indicated by the arrows in Figure 13.

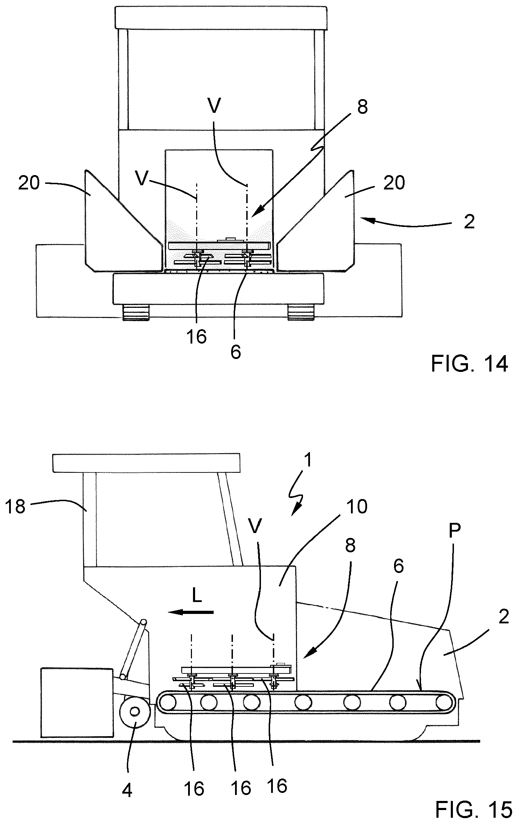

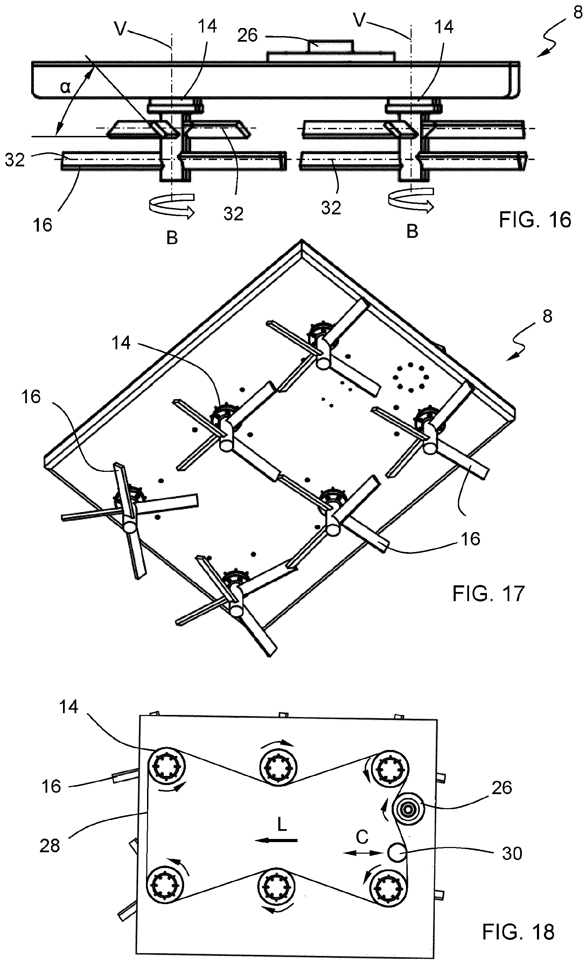

The paver 1 of Figures 14 to 18 is similar to the paver 1 of Figures 12 and 13, i.e., the rotors rotate about a vertical axis in the direction of the arrows B in Figure 16. Furthermore, three pairs of rotors 14 uniformly distributed in the longitudinal direction L are provided in this case.

This embodiment differs from the embodiment of Figures 12 and 13 due to the fact that two groups of four blades 16 are provided in each rotor 14. Each group is distributed at a different height of each of the rotors 14 in the first vertical direction V. Depending on the dimensions of the paver 1, more than two groups of blades 16 could be provided.

On the other hand, it should be mentioned that the number of blades 16 in each of the groups should not be interpreted in a limiting manner either, since three, five, or more blades could be provided in each group of one and the same rotor 14.

In each group of blades 16, said blades 16 transversely project from the rotor 14 in the radial direction and are uniformly distributed about its perimeter. In particular, in this case, the blades 16 project perpendicular to the first vertical direction V, each blade forming an angle of 90° with respect to the adjacent blades. The blades 16 consist of laminar steel profiles with a rectangular cross-section, welded onto the axis of the rotor 14.

As can be seen in Figure 16, to achieve better stirring, each blade of said plurality of blades 16 is planar and has its own generating blade axis 32.

The blade axes 32 of a group of blades are co-planar, in planes perpendicular to the first direction.

It can be seen in Figure 16 that each blade 16 is tilted about its own blade axis 32, such that it forms an angle α with respect to a horizontal plane, i.e., with respect to the plane perpendicular to the axis of the first vertical direction V. Furthermore, it is particularly preferred for the vertex of the angle α of the blades of the first and third rows of rotors to be located up ahead, in the direction of rotation B of the blades. This orientation of the inclination has the effect of causing an upward pushing on the aggregate mass. This pushing improves the mixing action in the mass. In contrast, in the rotor 14 that is adjacent in the direction of forward movement of the aggregate the vertex of said angle is located in the rear part in the direction of rotation of said rotor.

Figure 15 shows this situation, in which despite the three pairs of rotors being identical, the rotors 14 in the middle rotate in the opposite direction of the first and third pairs of rotors.

In another embodiment not shown in the drawings, the blades 16 can be formed having a certain curvature along a generating trajectory.

Finally, the driving principle of the six rotors 14 of this embodiment can be observed in Figure 18. The drive wheel 26 is directly connected with the power output of the engine of the paver. In turn, each of the rotors 14 is meshed through a chain 28 with the drive wheel. As a result of this mechanism, two rotors 14 that are adjacent in the longitudinal direction L rotate in opposite directions.

A tensioning sprocket 30 which keeps the chain taut at all times as a result of it being movable in the direction of the double arrow C of Figure 18 is also provided.

Finally, the effect of the inclination of the blades 16 with respect to their own axis depending on the direction of rotation of the blades can also be seen in Figure 18. As can be seen, in the first and third rows of rotors 14, the blades 16 cause an upward movement of the aggregate. In contrast, in the second row of rotors 14, when the blades 16 rotate they cause a downward movement of the aggregate.

## Claims

1. An asphalt aggregate paver (1) for asphalting a surface (116) to be asphalted, said paver (1) comprising
[a] a receiving hopper (2) for receiving asphalt aggregate,
[b] width-wise spreading means (4) for distributing said aggregate over said surface (116) to be asphalted,
[c] conveyor means (6) arranged between said receiving hopper (2) and said spreading means (4) for feeding said spreading means (4), by conveying said aggregate from said receiving hopper to said spreading means (4) in a longitudinal direction (L),
[d] mixing means (8), said mixing means (8) being a separate element of said conveyor means (6),
[e] said mixing means (8) being arranged between said receiving hopper (2) and said spreading means (4) and said mixing means (8) being movable with respect to said conveyor means (6) for stirring said aggregate when it is conveyed from said receiving hopper (2) to said spreading means (4), and
[f] said mixing means (8) being arranged outside and after said receiving hopper (2), **characterized in that**
[g] said mixing means (8) are arranged above said conveyor means (6).

2. The paver (1) according to claim 1, **characterized in that** said mixing means (8) are arranged inside a casing (10), after said receiving hopper (2), separating said mixing means (8) from said receiving hopper (2).

3. The paver (1) according to claim 1 or 2, **characterized in that** a distal end (12) of said mixing means (8) adjacent to said conveyor means (6) is arranged at a distance (h) comprised between 10 and 70 mm above said conveyor means (6) and more preferably between 20 and 50 mm.

4. The paver (1) according to any one of claims 1 to 3, **characterized in that** said mixing means (8) are rotatably mounted about an axis.

5. The paver (1) according to claim 4, **characterized in that** said mixing means (8) comprise at least one rotor (14) with a plurality of blades (16), said at least one rotor (14) being rotatably mounted about said axis, said axis being transverse to the longitudinal direction (L) of said paver (1).

6. The paver (1) according to claim 5, **characterized in that** a first imaginary plane (P) for conveying said aggregate passes over an upper surface of said conveyor means (6), and **in that** said at least one rotor (14) is rotatably mounted about an axis oriented in a first direction (V) perpendicular to said imaginary plane (P).

7. The paver (1) according to claim 5, **characterized in that** a first imaginary plane (P) for the conveyance of said aggregate passes over the upper surface of said conveyor means (6), and **in that** said at least one rotor (14) is rotatably mounted about an axis oriented in a second direction (H) parallel to said imaginary plane (P) and perpendicular to said longitudinal direction (L) of said paver (1).

8. The paver (1) according to any one of claims 5 to 7, **characterized in that** said mixing means (8) comprise at least two rotors (14) with a plurality of blades (16), and **in that** said at least two rotors (14) rotate in opposite directions with respect to one another.

9. The paver (1) according to claim 8, **characterized in that** said mixing means (8) comprise at least two rotors (14), a first rotor (14) of said at least two rotors (14) being offset with respect to the second rotor (14) of said at least two rotors (14) in the longitudinal direction (L).

10. The paver (1) according to any one of claims 6, 8 when it depends on claims 6 and 9, **characterized in that** said plurality of blades (16) projects from said rotor (14) transversely, and preferably in a radial direction.

11. The paver (1) according to claim 10, **characterized in that** each blade (16) of said plurality of blades (16) is planar, and **in that** each blade forms an angle (a) with respect to a horizontal plane.

12. The paver (1) according to claim 10 or 11, **characterized in that** said plurality of blades (16) are distributed along a height of said rotor (14) in said first vertical direction (V).

## Patentansprüche

1. Asphaltfertiger (1) zum Asphaltieren einer zu asphaltierenden Oberfläche (116), wobei der Fertiger (1) aufweist
[a] einen Aufnahmetrichter (2) zum Aufnehmen von Asphaltaggregat,
[b] ein breitenweises Verteilmittel (4) zum Verteilen des Aggregats über die zu asphaltierende Oberfläche (116),
[c] ein Fördermittel (6), das zwischen dem Aufnahmetrichter (2) und dem Verteilmittel (4) zum Versorgen des Verteilmittels (4) angeordnet ist, indem das Aggregat von dem Aufnahmetrichter in Längsrichtung (L) an das Verteilmittel (4) befördert wird,
[d] Mischmittel (8), wobei die Mischmittel (8) ein separates Element des Fördermittels (6) sind,
[e] wobei die Mischmittel (8) zwischen dem Aufnahmetrichter (2) und dem Verteilmittel (4) angeordnet sind, und die Mischmittel (8) bezüglich des Fördermittels (6) zum Rühren des Aggregats bewegbar sind, wenn es von dem Aufnahmetrichter (2) an das Verteilmittel (4) befördert wird, und
[f] wobei die Mischmittel (8) außen und nach dem Aufnahmetrichter (2) angeordnet sind,
**dadurch gekennzeichnet, dass**
[g] die Mischmittel (8) oberhalb des Fördermittels (6) angeordnet sind.

2. Fertiger (1) nach Anspruch 1, **dadurch gekennzeichnet, dass** die Mischmittel (8) nach dem Aufnahmetrichter (2) im Inneren eines Gehäuses (10), das die Mischmittel (8) von dem Aufnahmetrichter (2) trennt, angeordnet sind.

3. Fertiger (1) nach Anspruch 1 oder 2, **dadurch gekennzeichnet, dass** ein distales Ende (12) der Mischmittel (8) nahe dem Fördermittel (6) in einem Abstand (h), der zwischen 10 und 70 mm, und bevorzugt zwischen 20 und 50 mm beträgt, oberhalb des Fördermittels (6) angeordnet ist.

4. Fertiger (1) nach einem der Ansprüche 1 bis 3, **dadurch gekennzeichnet, dass** die Mischmittel (8) drehbar um eine Achse angeordnet sind.

5. Fertiger (1) nach Anspruch 4, **dadurch gekennzeichnet, dass** die Mischmittel (8) wenigstens einen Rotor (14) mit einer Vielzahl von Blättern (16) aufweisen, wobei der wenigstens eine Rotor (14) drehbar um die Achse angeordnet ist, wobei die Achse quer zu der Längsrichtung (L) des Fertigers (1) ist.

6. Fertiger (1) nach Anspruch 5, **dadurch gekennzeichnet, dass** eine erste imaginäre Ebene (P) zum Fördern des Aggregats über eine obere Oberfläche des Fördermittels (6) verläuft, und dass der wenigstens eine Rotor (14) drehbar um eine Achse angeordnet ist, die in einer ersten Richtung (V) senkrecht zu der imaginären Ebene (P) ausgerichtet ist.

7. Fertiger (1) nach Anspruch 5, **dadurch gekennzeichnet, dass** eine erste imaginäre Ebene (P) für die Förderung des Aggregats über die obere Oberfläche des Fördermittels (6) verläuft, und dass der wenigstens eine Rotor (14) drehbar um eine Achse angeordnet ist, die in einer zweiten Richtung (H) parallel zu der imaginären Ebene (P) und senkrecht zu der Längsrichtung (L) des Fertigers (1) angeordnet ist.

8. Fertiger (1) nach einem der Ansprüche 5 bis 7, **dadurch gekennzeichnet, dass** die Mischmittel (8) wenigstens zwei Rotoren (14) mit einer Vielzahl von Blättern (16) aufweisen, und dass die wenigstens zwei Rotoren (14) in entgegengesetzter Richtung zueinander rotieren.

9. Fertiger (1) nach Anspruch 8, **dadurch gekennzeichnet, dass** die Mischmittel (8) wenigstens zwei Rotoren (14) aufweisen, wobei ein erster Rotor (14) der wenigstens zwei Rotoren (14) bezüglich des zweiten Rotors (14) der wenigstens zwei Rotoren (14) in Längsrichtung (L) versetzt ist.

10. Fertiger (1) nach einem der Ansprüche 6, 8, wenn von Anspruch 6 abhängig, und 9, **dadurch gekennzeichnet, dass** die Vielzahl von Blättern (16) quer und bevorzugt in einer radialen Richtung von dem Rotor (14) absteht.

11. Fertiger (1) nach Anspruch 10, **dadurch gekennzeichnet, dass** jedes Blatt (16) der Vielzahl von Blättern (16) planar ist, und dass jedes Blatt einen Winkel (a) bezüglich einer horizontalen Ebene bildet.

12. Fertiger (1) nach Anspruch 10 oder 11, **dadurch gekennzeichnet, dass** die Vielzahl von Blättern (16) entlang einer Höhe des Rotors (14) in der ersten vertikalen Richtung (V) verteilt sind.

## Revendications

1. Finisseur (1) d'agrégat d'asphalte pour l'asphaltage d'une surface (116) à asphalter, ledit finisseur (1) comprenant
[a] une trémie de réception (2) pour recevoir un agrégat d'asphalte,
[b] des moyens d'épandage (4) en largeur pour répartir ledit agrégat sur ladite surface (116) à asphalter,
[c] des moyens de transport (6) agencés entre ladite trémie de réception (2) et lesdits moyens d'épandage (4) pour alimenter lesdits moyens d'épandage (4), en transportant ledit agrégat de ladite trémie de réception auxdits moyens d'épandage (4) dans une direction longitudinale (L),
[d] des moyens mélangeurs (8), lesdits moyens mélangeurs (8) étant un élément séparé desdits moyens de transport (6),
[e] lesdits moyens mélangeurs (8) étant agencés entre ladite trémie de réception (2) et lesdits moyens d'épandage (4), et lesdits moyens mélangeurs (8) étant mobiles par rapport auxdits moyens de transport (6) pour remuer ledit agrégat lorsqu'il est transporté de ladite trémie de réception (2) auxdits moyens d'épandage (4), et
[f] lesdits moyens mélangeurs (8) étant agencés à l'extérieur de ladite trémie de réception (2) et après celle-ci,
**caractérisé en ce que**
[g] lesdits moyens mélangeurs (8) sont agencés au-dessus desdits moyens de transport (6).

2. Finisseur (1) selon la revendication 1, **caractérisé en ce que** lesdits moyens mélangeurs (8) sont agencés à l'intérieur d'un boîtier (10), après ladite trémie de réception (2), séparant lesdits moyens mélangeurs (8) de ladite trémie de réception (2).

3. Finisseur (1) selon la revendication 1 ou 2, **caractérisé en ce qu'**une extrémité distale (12) desdits moyens mélangeurs (8) adjacente auxdits moyens de transport (6) est agencée à une distance (h) comprise entre 10 et 70 mm au-dessus desdits moyens de transport (6) et de manière davantage préférée entre 20 et 50 mm.

4. Finisseur (1) selon l'une quelconque des revendications 1 à 3, **caractérisé en ce que** lesdits moyens mélangeurs (8) sont montés de manière rotative autour d'un axe.

5. Finisseur (1) selon la revendication 4, **caractérisé en ce que** lesdits moyens mélangeurs (8) comprennent au moins un rotor (14) avec une pluralité de pales (16), ledit au moins un rotor (14) étant monté de manière rotative autour dudit axe, ledit axe étant transversal à la direction longitudinale (L) dudit finisseur (1).

6. Finisseur (1) selon la revendication 5, **caractérisé en ce qu'**un premier plan imaginaire (P) pour transporter ledit agrégat passe sur une surface supérieure desdits moyens de transport (6), et **en ce que** ledit au moins un rotor (14) est monté de manière rotative autour d'un axe orienté dans une première direction (V) perpendiculaire audit plan imaginaire (P).

7. Finisseur (1) selon la revendication 5, **caractérisé en ce qu'**un premier plan imaginaire (P) pour le transport dudit agrégat passe sur la surface supérieure desdits moyens de transport (6), et **en ce que** ledit au moins un rotor (14) est monté de manière rotative autour d'un axe orienté dans une deuxième direction (H) parallèle audit plan imaginaire (P) et perpendiculaire à ladite direction longitudinale (L) dudit finisseur (1).

8. Finisseur (1) selon l'une quelconque des revendications 5 à 7, **caractérisé en ce que** lesdits moyens mélangeurs (8) comprennent au moins deux rotors (14) avec une pluralité de pales (16), et **en ce que** lesdits au moins deux rotors (14) tournent dans des sens opposés l'un par rapport à l'autre.

9. Finisseur (1) selon la revendication 8, **caractérisé en ce que** lesdits moyens mélangeurs (8) comprennent au moins deux rotors (14), un premier rotor (14) desdits au moins deux rotors (14) étant décalé par rapport au deuxième rotor (14) desdits au moins deux rotors (14) dans la direction longitudinale (L).

10. Finisseur (1) selon l'une quelconque des revendications 6, 8 lorsqu'elle dépend des revendications 6 et 9, **caractérisé en ce que** ladite pluralité de pales (16) fait saillie depuis ledit rotor (14) transversalement, et de préférence dans une direction radiale.

11. Finisseur (1) selon la revendication 10, **caractérisé en ce que** chaque pale (16) de ladite pluralité de pales (16) est plane, et **en ce que** chaque pale forme un angle (a) par rapport à un plan horizontal.

12. Finisseur (1) selon la revendication 10 ou 11, **caractérisé en ce que** ladite pluralité de pales (16) sont réparties le long d'une hauteur dudit rotor (14) dans ladite première direction verticale (V).
